# EUROPÄISCHE PATENTSCHRIFT

(11) **EP 3 085 132 B1**
(45) Veröffentlichungstag und Bekanntmachung des Hinweises auf die Patenterteilung: **26.02.2020**
(21) Anmeldenummer: 14823910.6
(22) Anmeldetag: 19.12.2014
(51) Int. Cl.: H04W 12/00, H04W 12/04, H04W 12/08, H04W 4/02, H04W 8/18, H04W 48/04, H04L 29/06

(54) **VERFAHREN UND VORRICHTUNGEN ZUM BEREITSTELLEN EINER SUBSKRIPTION FÜR DIE KOMMUNIKATION ÜBER EIN MOBILFUNKNETZ**
METHOD AND DEVICES FOR PROVIDING A SUBSCRIPTION FOR COMMUNICATION VIA A MOBILE RADIO NETWORK
PROCÉDÉ ET DISPOSITIFS POUR METTRE À DISPOSITION UNE SOUSCRIPTION POUR LA COMMUNICATION VIA UN RÉSEAU DE COMMUNICATION MOBILE

(30) Priorität: 20.12.2013 DE 102013021966
(43) Veröffentlichungstag der Anmeldung: 26.10.2016
(73) Patentinhaber: Giesecke+Devrient Mobile Security GmbH, 81677 München (DE)
(72) Erfinder: GERSTENBERGER, Volker, 85435 Erding (DE); MORAWIETZ, Andreas, 81377 München (DE); NITSCH, Nils, 85570 Markt Schwaben (DE); SCHNEIDER, Olaf, 81829 München (DE); WEBER, Tom, 86807 Buchloe (DE)
(86) Internationale Anmeldenummer: PCT/EP2014/003449
(87) Internationale Veröffentlichungsnummer: WO 2015/090612

(56) Entgegenhaltungen:
- EP-A1- 2 464 153
- WO-A1-00/18156
- US-A1- 2005 274 793
- US-A1- 2009 253 408
- US-A1- 2010 210 304
- US-A1- 2011 306 318
- US-A1- 2013 281 085

## Beschreibung

### Gebiet der Erfindung

Die Erfindung betrifft die Kommunikation über Mobilfunknetze im Allgemeinen und insbesondere Verfahren und Vorrichtungen zum Bereitstellen einer Subskription auf einem Sicherheitselement, wie beispielsweise einer SIM, einer eUICC/UICC oder dergleichen. Dabei ist das Sicherheitselement Teil eines mobilen Endgeräts, das dazu ausgestaltet ist, über ein Mobilfunknetz zu kommunizieren.

### Hintergrund der Erfindung

Das Kommunizieren mittels eines mobilen Endgeräts, beispielsweise einem Smartphone oder einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das mobile Endgerät mit einem Sicherheitselement zum sicheren Speichern von Daten ausgestattet ist, die den Benutzer des mobilen Endgeräts gegenüber dem Mobilfunknetzwerk eindeutig identifizieren. Beispielsweise kommt bei einem mobilen Endgerät, das dazu ausgestaltet ist, gemäß dem GSM-Standard (Global System for Mobile Communications) zu kommunizieren, bei dem es sich zur Zeit um den auf der Welt am weitesten verbreiteten Mobilfunkstandard handelt, ein Sicherheitselement mit dem Namen SIM (Subscriber Identity Module) üblicherweise in Form einer Chipkarte bzw. Smartcard zum Einsatz. Gemäß dem GSM-Standard, dessen technische Merkmale in einer Vielzahl von miteinander verknüpften und voneinander abhängigen Spezifikationen definiert werden, enthält die SIM-Karte Teilnehmeridentifikationsdaten bzw. Subskriptionsberechtigungsdaten ("Subscription Credentials"), die Teil einer Subskription (auch Subskriptionsprofil genannt) sind, zum Identifizieren und Authentisieren des Benutzers bzw. Teilnehmers, einschließlich einer IMSI (International Mobile Subscriber Identity) und eines Authentisierungsschlüssels Kᵢ.

Eine solche Subskription ist in der Regel fest an ein Sicherheitselement gebunden. Es sind jedoch Szenarien denkbar, bei denen die Möglichkeit eines flexibleren Einsatzes einer Subskription wünschenswert wäre.

Aus der US 2009/253408 A1 geht ein Verfahren zum Feststellen des Verlustes, des Diebstahls oder der unauthorisierten Verwendung eines Mobiltelefons hervor. Das Mobiltelefon stellt anhand von Umgebungsparametern fest, ob eine nichtauthorisierte Nutzung stattfindet und verändert sein Verhalten im Fall einer nichtauthorisierten Nutzung.

Aus der WO 00/18156 A1, der US 2005/274793 A1 und der US 2013/0281085 A1 gehen Verfahren zum Verwalten von Subskriptionen auf einem Mobiltelefon hervor.

Die US 2005/274793 A1 beschreibt ein Verfahren zum Blockieren und Deblockieren von Geldkonten.

Die US 2013/281085 A1 beschreibt die Auswahl einer Teilnehmeridentität in einem Benutzergerät, welches mehrere Teilnehmeridentität aufweist.

Die US 2011/306318 A1 offenbart eine Methode zur Bereitstellung von Teilnehmeridentitätsdaten in einem drahtlosen Netzwerk.

Vor diesem Hintergrund stellt sich der vorliegenden Erfindung die Aufgabe, verbesserte Verfahren und Vorrichtungen zum Bereitstellen einer Subskription auf einem Sicherheitselement vorzuschlagen.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Gemäß einem ersten Aspekt der Erfindung wird ein Verfahren zum Bereitstellen einer Subskription auf einem Sicherheitselement vorgeschlagen, das einsetzbar oder fest verbaut Teil eines mobilen Endgeräts eines Benutzers ist. Dabei umfasst das Verfahren die folgenden Schritte: das Bereitstellen der Subskription auf dem Sicherheitselement des mobilen Endgeräts des Benutzers, wobei die Subskription als eine Subskription einer Vielzahl von Subskriptionen durch einen Dienst- oder Sachleister auf einem Hintergrundsystem vorgehalten wird und die Kommunikation über ein Mobilfunknetz ermöglicht; und das Zugreifen des Sicherheitselements auf das Mobilfunknetz mittels der auf dem Sicherheitselement bereitgestellten Subskription. Dabei wird während des Zugreifens des Sicherheitselements auf das Mobilfunknetz in zeitlichen Abständen die Position des mobilen Endgeräts bestimmt, um zu überprüfen, ob die Position des mobilen Endgeräts in einen vordefinierten Bereich von erlaubten Positionen fällt, wobei, falls die ermittelte Position des mobilen Endgeräts nicht in den vordefinierten Bereich von erlaubten Positionen fällt, der Zugriff des Sicherheitselements auf das Mobilfunknetz unterbrochen wird.

Vorzugsweise kann vorgesehen sein, dass die auf dem Sicherheitselement bereitgestellte Subskription nach einem vordefinierten Zeitraum deaktiviert wird.

Gemäß bevorzugter Ausführungsformen der Erfindung wird der Bereich von erlaubten Positionen für die Subskription vom Dienst- oder Sachleister vordefiniert, der die Vielzahl von Subskriptionen vorhält.

Vorzugsweise ist der Bereich von erlaubten Positionen für alle vom Dienst- oder Sachleister vorgehaltenen Subskriptionen gleich vordefiniert.

Gemäß bevorzugter Ausführungsformen der Erfindung ist der Bereich von erlaubten Positionen durch Daten vordefiniert, die auf dem Hintergrundsystem hinterlegt sind.

Vorzugsweise wird der Schritt des Überprüfens, ob die Position des mobilen Endgeräts in den vordefinierten Bereich von erlaubten Positionen fällt, durch das Mobilfunknetz oder das Hintergrundsystem durchgeführt.

Gemäß bevorzugter Ausführungsformen der Erfindung wird die Subskription dem Sicherheitselement des mobilen Endgeräts bereitgestellt, falls der Benutzer des mobilen Endgeräts eine Dienst- oder Sachleistung des Dienst- oder Sachleisters in Anspruch nimmt oder nehmen wird.

Vorzugsweise wird die Subskription über ein weiteres Mobilfunknetz auf das Sicherheitselement heruntergeladen, über das das Sicherheitselement mittels einer bereits vorhandenen weiteren Subskription kommunizieren kann. Alternativ wird die Subskription über ein WiFi-Netz des Dienst- oder Sachleisters oder über einen anderen Kommunikationskanal, wie NFC, Bluetooth, RFID, DECT, ZigBee, Infrarot oder dergleichen, auf dem Sicherheitselement bereitgestellt.

Gemäß bevorzugter Ausführungsformen der Erfindung wird die Position des mobilen Endgeräts mittels Daten von einem globalen Navigationssatellitensystem, vorzugsweise GPS-Daten, bestimmt. Alternativ oder zusätzlich kann die Position des mobilen Endgeräts bestimmt werden, indem die Mobilfunkzelle ermittelt wird, in der sich das mobile Endgerät befindet.

Bei dem Dienst- oder Sachleister kann es sich um ein Kaufhaus, einen Supermarkt, ein Einzelhandelsgeschäft, ein Restaurant, einen Coffee-Shop, den Betreiber eines öffentlichen Nahverkehrssystems, einen Freizeitpark, ein Hotel, einen Sportveranstalter, einen Konzertveranstalter oder dergleichen handeln.

Gemäß einem zweiten Aspekt der Erfindung wird ein Sicherheitselement bereitgestellt, das einsetzbar oder fest verbaut Teil eines mobilen Endgeräts ist und dazu ausgestaltet ist, nach einem Verfahren gemäß dem ersten Aspekt der Erfindung mit einer Subskription versehen zu werden, um über das Mobilfunknetz kommunizieren zu können.

Bei einem erfindungsgemäßen Sicherheitselement handelt es sich beispielsweise um einen in Hardware ausgestalteten Datenträger. Das Sicherheitselement ist beispielsweise als ein fest integrierter Bestandteil in einem mobilen Endgerät angeordnet, wobei es entweder in der Form nicht vom Endgerät entnommen werden kann, beispielsweise als Teilnehmeridentifikationsmodul, M2M-Modul, Co-Prozessor, Trusted Base, Trusted Platform Module. Alternativ ist das Sicherheitselement als ein entnehmbares Modul mit dem mobilen Endgerät verbunden, beispielsweise als Chipkarte, insbesondere als Teilnehmeridentifikationsmodul, Smart Card, Massenspeicherkarte, USB-Token, Multimediakarte, Secure MicroSD-Karte, Mobilfunknetztoken, z.B. ein UMTS-Surfstick und/oder als elektronisches Identitätsdokument, beispielsweise als elektronischer Personalausweis beziehungsweise Reisepass mit in einem Speicherbereich abgelegten maschinenlesbaren Identifikationsdaten einer Person.

Gemäß einer weiteren Alternative kann das Sicherheitselement als eine Kombination aus Hard- und Softwarekomponenten in einem vertrauenswürdigen Teil eines Betriebssystems des Endgeräts ausgebildet sein, die dem Fachmann auch als gesicherte Laufzeitumgebung ("Trusted Execution Environment"; TEE) bekannt ist. Das Sicherheitselement kann dann beispielsweise innerhalb einer solchen gesicherten Laufzeitumgebung in Form von darin ablaufenden Programmen, sogenannten Trustlets® ausgebildet sein.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Bereitstellen einer Subskription, als auch im Rahmen des zweiten Aspekts der Erfindung, d.h. im Rahmen eines Sicherheitselements mit einer gemäß dem ersten Aspekt der Erfindung bereitgestellten Subskription, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung eines Kommunikationssystems mit einem mobilen Endgerät mit einem Sicherheitselement und einem Mobilfunksystem, die unterschiedliche Aspekte der vorliegenden Erfindung illustriert,
- Fig. 2: eine schematische Darstellung eines erfindungsgemäß bevorzugten Ablaufs beim Bereitstellen einer Subskription auf dem Sicherheitselement des mobilen Endgeräts von Figur 1 und
- Fig. 3: eine beispielhafte schematische Illustration eines Bereichs von Positionen des mobilen Endgeräts von Figur 1, in dem es gemäß bevorzugter Ausführungsformen der Erfindung möglich ist, mittels der gemäß Figur 2 bereitgestellten Subskription über ein Mobilfunknetz zu kommunizieren, sowie eines Bereichs von Positionen, in dem es gemäß bevorzugter Ausführungsformen der Erfindung nicht möglich ist, mittels der gemäß Figur 2 bereitgestellten Subskription über ein Mobilfunknetz zu kommunizieren.

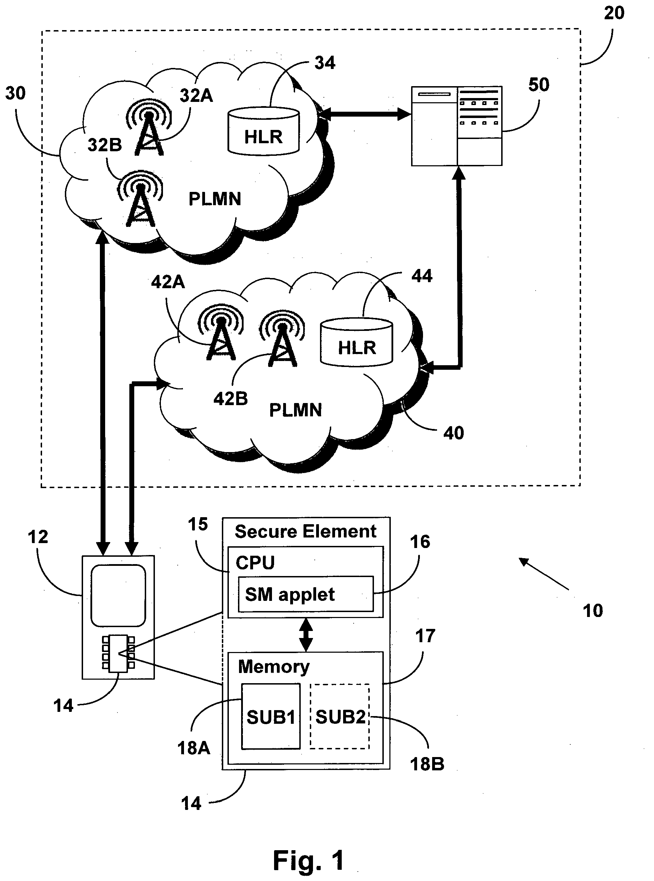

Figur 1 zeigt eine schematische Darstellung der Komponenten eines Kommunikationssystems 10 sowie einige der Kommunikationsverbindungen zwischen diesen Komponenten, das unterschiedliche Aspekte der vorliegenden Erfindung illustriert.

Ein beispielhaftes mobiles Endgerät 12 ist in Figur 1 dargestellt, das ein Sicherheitselement ("Secure Element") 14 zum sicheren Speichern und Verarbeiten von Daten umfasst, die beispielsweise das mobile Endgerät 12 und/oder dessen Benutzer eindeutig identifizieren. Wie dies in Figur 1 angedeutet ist, handelt es sich bei dem mobilen Endgerät 12 vorzugsweise um ein Mobiltelefon, ein Smartphone oder eine ähnliche Vorrichtung. Der Fachmann wird jedoch erkennen, dass das mobile Endgerät 12 gemäß der vorliegenden Erfindung ebenfalls in Form von anderen Vorrichtungen ausgestaltet sein kann, die dazu eingerichtet sind, über ein Mobilfunknetzwerk zu kommunizieren, wie beispielsweise ein Tablett-Computer, ein Notebook, ein beispielsweise mit einem M2M-Modul versehener PKW oder dergleichen.

Gemäß bevorzugter Ausführungsformen der Erfindung ist das Sicherheitselement 14 als eine eUICC (embedded Universal Integrated Circuit Card) mit einer darauf implementierten SIM-Applikation ausgestaltet, d.h. als ein Sicherheitselement, das fester Bestandteil des mobilen Endgeräts 12 ist und in einem Mobilfunknetzwerk für die eindeutige und sichere Identifizierung des Benutzers bzw. Teilnehmers und für die Bereitstellung unterschiedlicher Funktionen und Mehrwertdienste verwendet wird. Alternativ kann das Sicherheitselement 14 als eine UICC (Universal Integrated Circuit Card) oder SIM-Karte (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen, die je nach Generation und Typ des zugrunde liegenden Mobilfunkstandards als USIM, R-UIM, ISIM und dergleichen bezeichnet werden, ebenfalls von der vorliegenden Erfindung umfasst werden.

Gemäß weiterer bevorzugter Ausführungsformen der Erfindung kann das Sicherheitselement 14 als eine Kombination aus Hard- und Softwarekomponenten in einem vertrauenswürdigen Teil eines Betriebssystems einer zentralen Prozessoreinheit des mobilen Endgeräts 12 ausgebildet sein, die dem Fachmann auch als gesicherte Laufzeitumgebung ("Trusted Execution Environment"; TEE) bekannt ist. Das Sicherheitselement 14 kann dann beispielsweise innerhalb einer solchen gesicherten Laufzeitumgebung des mobilen Endgeräts 12 in Form von darin ablaufenden Programmen, sogenannten Trustlets® ausgebildet sein.

Das mobile Endgerät 12 ist dazu ausgestaltet, über die Luftschnittstelle mit einem Mobilfunknetzwerk (auch kurz als "Mobilfunknetz" oder als "Public Land Mobile Network" [PLMN] bezeichnet) eines Mobilfunksystems 20 zu kommunizieren. In Figur 1 sind beispielhaft die Mobilfunknetze 30 und 40 dargestellt. Dabei ist es denkbar, dass das Mobilfunknetz 30 von einem ersten Mobilfunknetzbetreiber (auch als "Mobile Network Operator" oder MNO bezeichnet) und das zweite Mobilfunknetz 40 von einem zweiten Mobilfunknetzbetreiber betrieben wird. Gemäß bevorzugter Ausführungsformen der Erfindung werden das Mobilfunknetz 30 und/ oder das Mobilfunknetz 40 gemäß dem GSM-Standard ("Global Standard for Mobile Communications") betrieben.

Nachstehend werden bevorzugte Ausführungsformen der Erfindung im Zusammenhang mit Mobilfunknetzwerken 30, 40 als Teil des Mobilfunksystems 20 gemäß dem GSM-Standard beschrieben, der in einer Vielzahl von ETSI-Spezifikationen spezifiziert ist. Der Fachmann wird jedoch erkennen, dass die vorliegende Erfindung auch im Zusammenhang mit anderen Mobilfunknetzen vorteilhaft eingesetzt werden kann. Derartige Netze umfassen Mobilfunknetze der dritten Generation (3GPP), wie UMTS (Universal Mobile Telecommunications System), Mobilfunknetze der vierten Generation (4G), wie LTE (Long Term Evolution), sowie andere Mobilfunknetze, wie CDMA und dergleichen.

Wie dies dem Fachmann bekannt ist, umfasst ein gemäß dem GSM-Standard aufgebautes Mobilfunknetz bzw. PLMN im Allgemeinen ein BSS ("Base Station Subsystem"), das aus einer Vielzahl von BTS ("Base Transceiver Station") besteht, die jeweilige Funkzellen des PLMN definieren und mit einem BSC ("Base Station Controller") verbunden sind. Üblicherweise handelt es sich bei dem BSC um einen einer Vielzahl von BSC, die mit einem gemeinsamen MSC ("Mobile Switching Center") kommunizieren. Häufig ist eine lokale Datenbank, die VLR ("Visitor Location Register") genannt wird, Teil des MSC, um Informationen über die Mobilfunkteilnehmer vorzuhalten, die sich momentan in den Funkzellen befinden, die von einem MSC versorgt werden (d.h. der von einem MSC abgedeckte Bereich). Das MSC stellt im Wesentlichen dieselbe Funktionalität wie eine Vermittlungsstelle im Festnetz (publicswitched telephone network; PSTN) bereit und steht in Kommunikation mit einem HLR ("Home Location Register"), bei dem es sich um die primäre Datenbank des PLMN handelt, in der Informationen zur Anmeldung bzw. Authentisierung der Mobilfunkteilnehmer gespeichert sind. Hierzu hat das HLR üblicherweise Zugriff auf ein AUC ("Authentication Center"). Wie dies dem Fachmann bekannt ist, können die Kommunikationsverbindungen zwischen den vorstehend beschriebenen Komponenten eines PLMNs auf proprietären und/ oder offenen Standards basieren. Die verwendeten Protokolle können beispielsweise SS7- oder IP-basiert sein. Wie die Netzwerckomponenten als separate oder zusammengefasste Einheiten ausgebildet sind und wie die Schnittstellen zwischen diesen Komponenten ausgebildet sind, ist Sache des MNO, so dass die vorstehende Beschreibung lediglich als beispielhaft zu verstehen ist.

Der Fachmann wird erkennen, dass, obgleich die vorstehend beschriebenen Funktionseinheiten eines herkömmlichen Mobilfunknetzes gemäß dem GSM-Standard in anderen oder zukünftigen Mobilfunkstandards andere Namen aufweisen können, die zugrundeliegenden Prinzipien im Wesentlichen gleich sind und diese daher von der Erfindung ebenfalls umfasst werden.

Der Übersichtlichkeit halber sind von den vorstehend beschriebenen Komponenten eines Mobilfunknetzes lediglich die folgenden in der schematischen Darstellung von Figur 1 gezeigt: zwei beispielhafte BTS 32A, 32B und ein HLR 34 für das Mobilfunknetz 30 sowie zwei beispielhafte BTS 42A, 42B und ein HLR 44 für das Mobilfunknetz 40. Wie sich dies Figur 1 entnehmen lässt, stehen das Mobilfunknetz 30 und das Mobilfunknetz 40 zumindest zeitweise in Kommunikation mit einem Hintergrundsystem 50, vorzugsweise in Form eines geeignet ausgestalteten Servers, wie dies nachstehend im Detail beschrieben wird. Das Mobilfunknetz 30 und/ oder das Mobilfunknetz 40 können neben weiteren dem Fachmann bekannte Funktionseinheiten beispielsweise jeweils ein SMS-C ("Short Message Service Center") zum Speichern, Weiterleiten, Konvertieren und Zustellen von SMS-Nachrichten aufweisen, mittels derer beispielsweise Daten vom Hintergrundsystem 50 an das Sicherheitselement 14 des mobilen Endgeräts 12 übertragen werden können.

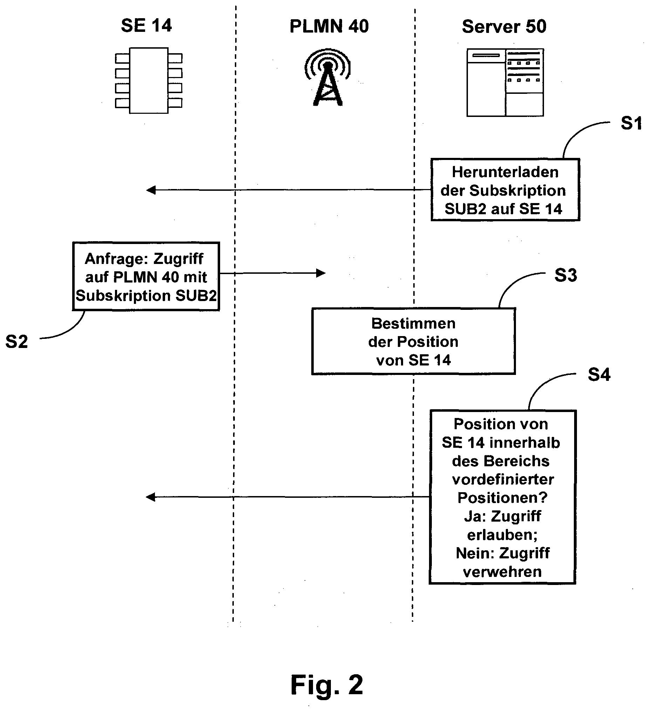

Wie sich dies der vergrößerten Ansicht des Sicherheitselements 14 in Figur 1 entnehmen lässt, umfasst das Sicherheitselement 14 vorzugsweise eine zentrale Verarbeitungseinheit bzw. einen zentralen Prozessor ("central processing unit"; CPU) 15. Vorzugsweise ist der Prozessor 15 derart ausgestattet, dass Applikationen auf dem Prozessor 15 ausgeführt werden können, wie beispielsweise eine Subskriptionsverwaltungsapplikation ("subscription management applet"; SM Applet), die vorzugsweise zumindest einige der Features zum Verwalten von Subskriptionen auf dem Sicherheitselement 14 bereitstellt, wie dies nachstehend im Zusammenhang mit der Figur 2 detailliert beschrieben wird. Vorzugsweise ist die Subskriptionsverwaltungsapplikation 16 in Form eines Java Applets implementiert. Zur Bereitstellung einer entsprechenden Ausführungsumgebung für das SM Applet 16 kann vorzugsweise ein sicheres Betriebssystem (nicht in Figur 1 gezeigt) auf dem Prozessor 15 implementiert sein.

Das Sicherheitselement 14 umfasst vorzugsweise ferner eine Speichereinheit 17, die vorzugsweise als eine nicht-flüchtige, wiederbeschreibbare Speichereinheit, z.B. in Form eines Flash-Speichers, implementiert ist. Wie sich dies Figur 1 entnehmen lässt, ist eine erste Subskription 18A (SUB1) in der Speichereinheit 17 des Sicherheitselements 14 gespeichert. Vorzugsweise enthält die erste Subskription 18A Daten, die es dem Sicherheitselement 14 und dem mobilen Endgerät 12 ermöglichen, sich in das Mobilfunknetz 30 einzubuchen und über dieses zu kommunizieren, d.h. Daten, wie Subskriptionsberechtigungsdaten ("Subscription Credentials"), einen MNO-spezifischen Authentisierungsalgorithmus und dergleichen. Vorzugsweise sind zumindest Teile der Speichereinheit 17 des Sicherheitselements 14 dazu ausgestaltet, sicher die Daten darin zu speichern, beispielsweise sensitive Subskriptionsberechtigungsdaten, wie eine IMSI ("International Mobile Subscriber Identity") oder ein Authentisierungsschlüssel Ki, die Teil der Subskription 18A sind.

Wie dies in Figur 1 angedeutet ist, weist die Speichereinheit 17 vorzugsweise wenigstens einen weiteren "Slot" zum Unterbringen zusätzlicher Subskriptionen auf, wie beispielsweise zum Unterbringen der in Figur 1 dargestellten weiteren Subskription 18B (SUB2), die vorzugsweise von dem Hintergrundsystem 50 gemäß dem in Figur 2 dargestellten und nachstehend detaillierter beschriebenen Verfahren auf dem Sicherheitselement 14 bereitgestellt wird.

In Schritt S1 von Figur 2 wird auf dem Sicherheitselement 14 eine Subskription 18B (SUB2) bereitgestellt, indem die Subskription 18B von einem Server des Hintergrundsystems 50 auf das Sicherheitselement 14 heruntergeladen wird. Beispielhaft erlaubt die vom Hintergrundsystem 50 bereitgestellte Subskription 18B die Kommunikation über das Mobilfunknetz 40.

Der Schritt S1 von Figur 2 wird vorzugsweise dadurch ausgelöst, dass der Benutzer des mobilen Endgeräts 12 eine Dienst- oder Sachleistung eines Dienst- oder Sachleisters in Anspruch nimmt. Bei einem solchen Dienst- oder Sachleister kann es sich erfindungsgemäß beispielsweise um ein Kaufhaus, einen Supermarkt, ein Einzelhandelsgeschäft, ein Restaurant, einen Coffee-Shop, den Betreiber eines öffentlichen Nahverkehrssystems, einen Freizeitpark, ein Hotel, einen Sportveranstalter, einen Konzertveranstalter oder dergleichen handeln. Dabei ist es denkbar, dass das erfindungsgemäße Verfahren zum Einsatz kommt, wenn ein Benutzer eines mobilen Endgeräts 12 beispielsweise ein Kaufhaus betritt, sich in einem Coffee-Shop bzw. Kaffeehaus ein Getränk kauft oder bei einem Betreiber eines öffentlichen Nahverkehrssystems eine Monatskarte erwirbt, was Beispiele für die Inanspruchnahme einer Dienst- oder Sachleistung eines Dienst- oder Sachleisters im Sinne der vorliegenden Erfindung sind.

Wie der Fachmann erkennen wird, kann der Schritt des Herunterladens der Subskription 18B auf das Sicherheitselement 14 des mobilen Endgeräts 12 auf vielerlei Arten und Weisen technisch realisiert werden. Erfindungsgemäß ist unter anderem denkbar, dass die Subskription 18B über das Mobilfunknetz 30 heruntergeladen wird, über welches das Sicherheitselement 14 aufgrund der bereits vorhandenen Subskription 18A kommunizieren kann. Alternativ könnte die Subskription 18 über ein WLAN- bzw. WiFi-Netz des Dienst- oder Sachleisters auf das Sicherheitselement 14 heruntergeladen werden. Nachdem die Subskription 18B in Schritt S1 von Figur 2 auf das Sicherheitselement 14 des mobilen Endgeräts 12 heruntergeladen worden ist, kann das Sicherheitselement 14 in Schritt S2 von Figur 2 mittels der in Schritt 1 heruntergeladenen Subskription 18B auf das Mobilfunknetz 40 zugreifen, d.h. insbesondere über dieses kommunizieren.

Erfindungsgemäß ist nun in einem Schritt S3 vorgesehen, dass vorzugsweise beim ersten Zugriff des Sicherheitselements 14 des mobilen Endgeräts 12 auf das Mobilfunknetz 40 und danach fortlaufend die aktuelle Position des mobilen Endgeräts 12 bestimmt wird, um damit fortlaufend überprüfen zu können, ob die Position des mobilen Endgeräts 12 in einen vordefinierten Bereich von erlaubten Positionen fällt. Bei den drei bereits vorstehend erwähnten Beispielen könnte dieser vordefinierte Bereich den Verkaufsräumen des Kaufhauses, dem Kundenbereich des Coffee-Shops oder dem Streckennetz des Betreibers eines öffentlichen Nahverkehrssystems entsprechen. Vorzugsweise sind entsprechende Daten, die den Bereich von erlaubten Positionen für die Subskription 18B definieren, auf einer Datenbank des Hintergrundsystems 50 hinterlegt, und zwar vorzugsweise im Zusammenhang mit der entsprechenden Subskription.

Die Bestimmung der Position des mobilen Endgeräts 12 kann dabei vorzugsweise durch das Mobilfunknetz 40 und/ oder das Hintergrundsystem 50 erfolgen.

Gemäß einer bevorzugten Ausführungsform der Erfindung ist das mobile Endgerät 12 mit einem GPS-Modul oder mit einem Modul für ein anderes globales Navigationssatellitensystem ausgestattet, das dazu ausgestaltet ist, Daten zu liefern, anhand derer die aktuelle Position des mobilen Endgeräts 12 bestimmt werden kann. Alternativ oder zusätzlich kann die aktuelle Position des mobilen Endgeräts 12 anhand der Funkzelle des Mobilfunknetzes 40 bestimmt werden, in der sich das mobile Endgerät 12 befindet. Wie bereits vorstehend beschrieben, wird eine Funkzelle des Mobilfunknetzes 40 in der Regel durch ein BTS definiert, beispielsweise die in Figur 1 dargestellten beispielhaften BTS 42A und 42B.

Nachdem in Schritt S3 von Figur 2 die aktuelle Position des mobilen Endgeräts 12 bzw. Sicherheitselements 14 bestimmt worden ist, wird in einem Schritt S4 von Figur 2 überprüft, ob die in Schritt S3 bestimmte aktuelle Position des mobilen Endgeräts 12 bzw. Sicherheitselements 14 in den Bereich von vordefinierten erlaubten Positionen fällt. Wie vorstehend bereits beschrieben, ist vorzugsweise ein entsprechender Datensatz, der den Bereich von erlaubten Positionen definiert, im Hintergrundsystem 50 für die Subskription 18B hinterlegt.

Wird bei dieser Überprüfung in Schritt S4 festgestellt, dass die für das mobile Endgerät 12 bestimmte aktuelle Position, in den Bereich von erlaubten Positionen fällt, wird der Zugriff auf das Mobilfunknetz 40 mittels der Subskription 18B erlaubt. Wird hingegen festgestellt, dass die für das mobile Endgerät 12 bestimmte aktuelle Position, nicht in den Bereich von erlaubten Positionen fällt, ist erfindungsgemäß vorgesehenen, dass eine Kommunikation mittels der Subskription 18B über das Mobilfunknetz 40 nicht möglich ist. Hierdurch kann insbesondere verhindert werden, dass der Benutzer des mobilen Endgeräts 12 die vom Dienst- oder Sachleister bereitgestellte Subskription 18B außerhalb des vom Dienst- oder Sachleister definierten Bereichs von erlaubten Positionen verwendet.

Gemäß bevorzugter Ausführungsformen der Erfindung kann zusätzlich vorgesehen sein, dass die Verwendung der vom Dienst- oder Sachleister bereitgestellten Subskription zeitlich begrenzt ist. Es ist beispielsweise, dass der Dienst- oder Sachleister vorgeben kann, dass die vom ihm bereitgestellte Subskription nur über einen Zeitraum von beispielsweise einer Stunde verwendet werden kann, indem entsprechende Vorgaben im Mobilfunknetz 40 und/ oder Hintergrundsystem 50 hinterlegt werden.

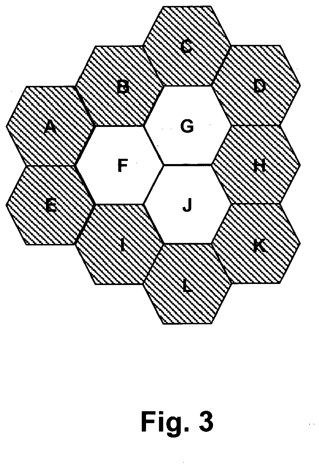

Figur 3 zeigt eine beispielhafte schematische Darstellung eines Bereichs von für die Verwendung der Subskription 18B erlaubten Positionen sowie eines Bereichs von für die Verwendung der Subskription 18B nicht erlaubten Positionen des mobilen Endgeräts 12, wobei die zwei Bereiche jeweils durch entsprechende Mobilfunkzellen des Mobilfunknetzes 40 definiert werden, die ein bestimmtes räumliches Gebiet abdecken. Dabei wird beispielhaft ein erster Bereich dieses räumlichen Gebiets durch die Mobilfunkzellen A bis E, I, L und K (in Figur 3 schraffiert dargestellt) und ein zweiter Bereich durch die Mobilfunkzellen F, G und J definiert, wobei beispielhaft der zweite Bereich den Bereich erlaubter Positionen im Sinne der Erfindung darstellt, bei dem es sich beispielsweise um die Verkaufsräume eines Kaufhauses, den Kundenbereich eines Coffee-Shops, das Streckennetz eines Nahverkehrssystems und dergleichen handeln könnte. In diesem Fall wäre ein Versuch, die Subskription 18A zu verwenden, nur dann erfolgreich, wenn sich das mobile Endgerät 12 bzw. das Sicherheitselement 14 zum Zeitpunkt der entsprechenden Anfrage in dem durch die Mobilfunkzellen F, G und J definierten Bereich von erlaubten Positionen befindet. Falls sich das mobile Endgerät 12 bzw. das Sicherheitselement 14 beim Versuch, die Subskription 18B zu verwenden, hingegen aktuell in dem durch die Mobilfunkzellen A bis E, I, L und K definierten Bereich von nicht erlaubten Positionen befindet, wird erfindungsgemäß die Verwendung der Subskription 18B verwehrt.

Das vorstehend im Zusammenhang mit den Figuren 2 und 3 beschriebene Verfahren zum Bereitstellen einer Subskription auf einem Sicherheitselement kann von einem Dienst- oder Sachleister insbesondere dazu vorteilhaft eingesetzt werden, einen weiteren Anreiz für die Inanspruchnahme einer vom Dienst- oder Sachleister angebotenen Dienst- oder Sachleistung zu schaffen. Der Fachmann wird jedoch erkennen, dass das erfindungsgemäße Verfahren nicht auf den in Figur 2 dargestellten genauen Ablauf von Schritten beschränkt ist. Beispielsweise wird der Fachmann erkennen, dass eine erste Positionsüberprüfung des mobilen Endgeräts 12 auch vor dem Schritt S1 von Figur 2 erfolgen kann, d.h. bevor die Subskription 18B auf das Sicherheitselement 14 heruntergeladen wird.

## Patentansprüche

1. Verfahren zum Bereitstellen einer Subskription (18B) auf einem Sicherheitselement (14), das zum Einsetzen ausgebildet ist oder fest verbaut Teil eines mobilen Endgeräts (12) eines Benutzers ist, wobei das Verfahren die folgenden Schritte umfasst:
Bereitstellen der Subskription (18B) auf dem Sicherheitselement (14) des mobilen Endgeräts (12) des Benutzers, wobei die Subskription (18B) als eine Subskription einer Vielzahl von Subskriptionen durch einen Dienst- oder Sachleister auf einem Hintergrundsystem (50) vorgehalten wird und die Kommunikation über ein Mobilfunknetz (40) ermöglicht,
wobei die Subskription (18B) über ein weiteres Mobilfunknetz (30) auf das Sicherheitselement (14) heruntergeladen wird, über das das Sicherheitselement (14) mittels einer bereits vorhandenen weiteren Subskription (18A) kommunizieren kann, und
Zugreifen des Sicherheitselements (14) auf das Mobilfunknetz (40) mittels der auf dem Sicherheitselement (14) bereitgestellten Subskription (18B),
wobei während des Zugreifens des Sicherheitselements (14) auf das Mobilfunknetz (40) in zeitlichen Abständen die Position des mobilen Endgeräts (12) bestimmt wird, um zu überprüfen, ob die Position des mobilen Endgeräts (12) in einen vordefinierten Bereich von erlaubten Positionen fällt, und
wobei, falls die ermittelte Position des mobilen Endgeräts (12) nicht in den vordefinierten Bereich von erlaubten Positionen fällt, der Zugriff der bereitgestellten Subskription (18B) auf das Mobilfunknetz (40) verwehrt wird.

2. Verfahren nach Anspruch 1, wobei nach einem vordefinierten Zeitraum die auf dem Sicherheitselement (14) bereitgestellte Subskription (18B) deaktiviert wird.

3. Verfahren nach Anspruch 1, wobei der Dienst- oder Sachleister, der die Vielzahl von Subskriptionen vorhält, den Bereich von erlaubten Positionen für die Subskription (18B) vordefiniert.

4. Verfahren nach Anspruch 1, wobei der Bereich von erlaubten Positionen für die Vielzahl der vom Dienst- oder Sachleister vorgehaltenen Subskriptionen vordefiniert ist.

5. Verfahren nach Anspruch 1, wobei der Bereich von erlaubten Positionen durch Daten vordefiniert ist, die auf dem Hintergrundsystem (50) hinterlegt sind.

6. Verfahren nach Anspruch 1, wobei der Schritt des Überprüfens, ob die Position des mobilen Endgeräts (12) in den vordefinierten Bereich von erlaubten Positionen fällt, durch das Mobilfunknetz (40) oder das Hintergrundsystem (50) durchgeführt wird.

7. Verfahren nach Anspruch 1, wobei die Subskription (18B) dem Sicherheitselement (14) des mobilen Endgeräts (12) bereitgestellt wird, falls der Benutzer des mobilen Endgeräts (12) eine Dienst- oder Sachleistung des Dienst- oder Sachleisters in Anspruch nimmt.

8. Verfahren nach Anspruch 1, wobei die Subskription (18B) über ein WiFi-Netz des Dienst- oder Sachleisters auf dem Sicherheitselement (14) oder über einen anderen Kommunikationskanal, wie NFC, Bluetooth, RFID, DECT, ZigBee, Infrarot oder dergleichen, bereitgestellt wird.

9. Verfahren nach Anspruch 1, wobei die Position des mobilen Endgeräts (12) mittels Daten von einem globalen Navigationssatellitensystem, vorzugsweise GPS-Daten, ermittelt wird.

10. Verfahren nach Anspruch 1, wobei die Position des mobilen Endgeräts (12) bestimmt wird, indem die Mobilfunkzelle ermittelt wird, in der sich das mobile Endgerät (12) befindet.

11. Verfahren nach einem der vorhergehenden Ansprüche, wobei es sich bei dem Dienst- oder Sachleister um ein Kaufhaus, einen Supermarkt, ein Einzelhandelsgeschäft, ein Restaurant, einen Coffee-Shop, den Betreiber eines öffentlichen Nahverkehrssystems, einen Freizeitpark, ein Hotel, einen Sportveranstalter, einen Konzertveranstalter oder dergleichen handelt.

12. Kommunikationssystem (10) mit einem Mobilfunknetz (40), einem Hintergrundsystem (50) und einem mobilen Endgerät (12) mit einem Sicherheitselement (14) wobei das Kommunikationssystem (10) eingerichtet ist, ein Verfahren gemäß einem der vorhergehenden Ansprüche durchzuführen.

## Claims

1. A method for supplying a subscription (18B) on a security element (14) which is configured for insertion or is part of a user's mobile end device (12) and permanently installed therein, wherein the method comprises the following steps:
supplying the subscription (18B) on the security element (14) of the user's mobile end device (12), the subscription (18B) being held available on a background system (50) by a service or product provider as one subscription of a plurality of subscriptions and enabling communication over a mobile radio network (40),
wherein the subscription (18B) is downloaded to the security element (14) over a further mobile radio network (30) over which the security element (14) can communicate by means of a further subscription (18A) already present, and
accessing the mobile radio network (40) by the security element (14) by means of the subscription (18B) supplied on the security element (14),
wherein while the security element (14) accesses the mobile radio network (40) the position of the mobile end device (12) is determined at time intervals in order to check whether the position of the mobile end device (12) falls within a predefined range of allowed positions, and
wherein, if the established position of the mobile end device (12) does not fall within the predefined range of allowed positions, the access of the subscription supplied (18B) to the mobile radio network (40) is denied.

2. The method according to claim 1, wherein after a predefined time period the subscription (18B) supplied on the security element (14) is deactivated.

3. The method according to claim 1, wherein the service or product provider holding the plurality of subscriptions available predefines the range of allowed positions for the subscription (18B).

4. The method according to claim 1, wherein the range of allowed positions is predefined for the plurality of the subscriptions held available by the service or product provider.

5. The method according to claim 1, wherein the range of allowed positions is predefined by data which are deposited on the background system (50).

6. The method according to claim 1, wherein the step of checking whether the position of the mobile end device (12) falls within the predefined range of allowed positions is carried out by the mobile radio network (40) or the background system (50).

7. The method according to claim 1, wherein the subscription (18B) is supplied to the security element (14) of the mobile end device (12) if the user of the mobile end device (12) utilizes a service or product provision of the service or product provider.

8. The method according to claim 1, wherein the subscription (18B) is supplied on the security element (14) over a WiFi network of the service or product provider or over another communication channel, such as NFC, Bluetooth, RFID, DECT, ZigBee, infrared, or the like.

9. The method according to claim 1, wherein the position of the mobile end device (12) is established by means of data from a global navigation satellite system, preferably GPS data.

10. The method according to claim 1, wherein the position of the mobile end device (12) is determined by establishing the mobile radio cell in which the mobile end device (12) is located.

11. The method according to any of the preceding claims, wherein the service or product provider is a department store, a supermarket, a retail store, a restaurant, a coffee shop, the operator of a public mass transit system, a leisure park, a hotel, a sports organizer, a concert organizer, or the like.

12. A communication system (10) having a mobile radio network (40), a background system (50) and a mobile end device (12) having a security element (14), wherein the communication system (10) is arranged to carry out a method according to any of the preceding claims.

## Revendications

1. Procédé de mise à disposition d'un abonnement (18B) sur un élément de sécurité (14) qui est conçu pour être inséré ou qui est une partie incorporée à demeure d'un terminal mobile (12) d'un utilisateur, cependant que le procédé comprend les étapes suivantes :
mise à disposition de l'abonnement (18B) sur l'élément de sécurité (14) du terminal mobile (12) de l'utilisateur, cependant que l'abonnement (18B) est tenu à disposition sur un système d'arrière-plan (50) par un prestataire de services ou prestataire de produits en tant qu'un abonnement d'une pluralité d'abonnements et permet la communication par l'intermédiaire d'un réseau de radiocommunication mobile (40),
cependant que l'abonnement (18B) est téléchargé sur l'élément de sécurité (14) par l'intermédiaire d'un autre réseau de radiocommunication mobile (30) par l'intermédiaire duquel l'élément de sécurité (14) peut communiquer au moyen d'un autre abonnement (18A) déjà existant, et
accès de l'élément de sécurité (14) au réseau de radiocommunication mobile (40) au moyen de l'abonnement (18B) mis à disposition sur l'élément de sécurité (14),
cependant que, pendant l'accès de l'élément de sécurité (14) au réseau de radiocommunication mobile (40), la position du terminal mobile (12) est déterminée à des intervalles de temps afin de vérifier si la position du terminal mobile (12) se situe dans une zone prédéfinie de positions autorisées, et
cependant que, dans le cas où la position déterminée du terminal mobile (12) ne se situe pas dans la zone prédéfinie de positions autorisées, l'accès au réseau de radiocommunication mobile (40) par l'abonnement (18B) mis à disposition est refusé.

2. Procédé selon la revendication 1, cependant que, après un laps de temps prédéfini, l'abonnement (18B) mis à disposition sur l'élément de sécurité (14) est désactivé.

3. Procédé selon la revendication 1, cependant que le prestataire de services ou prestataire en nature qui tient la pluralité d'abonnements à disposition prédéfinit la zone de positions autorisées pour l'abonnement (18B).

4. Procédé selon la revendication 1, cependant que zone de positions autorisées est prédéfinie pour la pluralité des abonnements tenus à disposition par le prestataire de services ou prestataire en nature.

5. Procédé selon la revendication 1, cependant que la zone de positions autorisées est prédéfinie par des données enregistrées sur le système d'arrière-plan (50).

6. Procédé selon la revendication 1, cependant que l'étape de la vérification pour discerner si la position du terminal mobile (12) se situe dans la zone prédéfinie de positions autorisées est exécutée par le réseau de radiocommunication mobile (40) ou par le système d'arrière-plan (50).

7. Procédé selon la revendication 1, cependant que l'abonnement (18B) est mis à la disposition de l'élément de sécurité (14) du terminal mobile (12) si l'utilisateur du terminal mobile (12) s'adjoint une prestation de services ou prestation en nature de la part du prestataire de services ou prestataire en nature.

8. Procédé selon la revendication 1, cependant que l'abonnement (18B) est mis à disposition sur l'élément de sécurité (14) par l'intermédiaire d'un réseau WiFi du prestataire de services ou prestataire en nature ou par l'intermédiaire d'un autre canal de communication tel que NFC, Bluetooth, RFID, DECT, ZigBee, infrarouge ou similaires.

9. Procédé selon la revendication 1, cependant que la position du terminal mobile (12) est déterminée au moyen de données d'un système mondial de navigation par satellite, de préférence de données GPS.

10. Procédé selon la revendication 1, cependant que la position du terminal mobile (12) est déterminée en ce que la cellule de radiocommunication mobile dans laquelle se trouve le terminal mobile (12) est identifiée.

11. Procédé selon une des revendications précédentes, cependant que le prestataire de services ou prestataire en nature consiste en un grand magasin, en un supermarché, en un magasin de détail, en un restaurant, en un café, en l'exploitant d'un système de transports public, en un parc de loisirs, en un hôtel, en un organisateur de manifestations sportives, en un organisateur de concerts ou affaires similaires.

12. Système de communication (10) comprenant un réseau de radiocommunication mobile (40), un système d'arrière-plan (50) et un terminal mobile (12) comprenant un élément de sécurité (14), cependant que le système de communication (10) est conçu pour exécuter un procédé selon une des revendications précédentes.
